Europäisches Patentamt

European Patent Office

Office européen des brevets

(11) Veröffentlichungsnummer: **0 093 844**
**B1**

(12) # EUROPÄISCHE PATENTSCHRIFT

(45) Veröffentlichungstag der Patentschrift:
04.11.87

(21) Anmeldenummer: 83101805.6

(22) Anmeldetag: 24.02.83

(51) Int. Cl.⁴: **B 60 R 22/46**

(54) Aufwickelvorrichtung für Sicherheitsgurte.

(30) Priorität: 29.04.82 DE 3215928

(43) Veröffentlichungstag der Anmeldung:
16.11.83 Patentblatt 83/46

(45) Bekanntmachung des Hinweises auf die Patenterteilung:
04.11.87 Patentblatt 87/45

(84) Benannte Vertragsstaaten:
FR GB IT SE

(56) Entgegenhaltungen:
DE-A-2 517 572
DE-B-2 262 889
DE-B-2 510 514
FR-A-2 491 340

(73) Patentinhaber: Bayern- Chemie Gesellschaft für
flugchemische Antriebe mit beschränkter
Haftung, D-8261 Aschau a. Inn (DE)

(72) Erfinder: Nilsson, Karl- Erik, Johann- Sebastian-
Bach- Strasse 56, D-8012 Ottobrunn (DE)

(74) Vertreter: Frick, Gerhard, Harthausener Strasse 18
Ortsteil Neukeferloh, D-8011 Grasbrunn (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung bezieht sich auf eine Aufwickelvorrichtung für Sicherheitsgurte in Fahrzeugen mit einem Gurtaufrollautomaten und einem Rückstrammer nach dem Oberbegriff des Anspruches

Rückstrammer dienen dazu, eine Gurtlose beim Fahrzeugaufprall durch Zurückziehen des Gurtes zu beseitigen, damit der freie Vorfallweg bis zum Wirksamwerden des Gurtes möglichst gering ist. Für eine ordnungsgemäße Gurtstrammung ist dabei ein Gurtrückzug von etwa 20 cm erforderlich. Dies entspricht einer Drehung der Gurtbandspule von etwa 550°C.

Eine Aufwickelvorrichtung nach dem Oberbegriff des Anspruches 1 ist bereits bekannt (DE-B-25 10 514).

Dabei sind zwei Drehflügel an der Drehkolbenwelle des Rotationskolbenmotors axial nebeneinander angeordnet, wobei dem ersten Drehflügel an der Drehkolbenwelle unter Bildung einer ersten Expansionskammer ein gehäusefester Flügel zugeordnet ist, während dem zweiten Drehflügel an der Drehkolbenwelle unter Bildung einer zweiten Expansionkammer ein an einem drehbaren Mantel drehfest angeordneter Drehflügel zugeordnet ist. Die in die beiden Expansionskammern eindringenden Gase bewirken dann eine Verdrehung des Drehflügels der Drehkolbenwelle, der mit dem gehäusefesten Flügel zusammenwirkt, ferner eine Verdrehung des zweiten Drehflügels der Drehkolbenwelle, der mit dem Drehflügel am Mantel zusammenwirkt. Gleichzeitig erweitert sich der Expansionsraum zwischen dem zweiten Drehflügel der Drehkolbenwelle und dem Drehflügel an dem Mantel, so daß durch letzteren der Gurtbandspule fast zwei Umdrehungen erteilt werden.

Am Ende des Spannungsvorgangs wird die Bewegungsenergie des Rotationskolbenmotors durch den gehäusefesten als Anschlag wirkenden Flügel vernichtet.

Aus der FR-A-24 91 340 ist eine Aufwickelvorrichtung bekannt, bei der der Rückstrammerantrieb durch einen durch einen pyrotechnischen Treibsatz beaufschlagbaren Kolben in einem Zylinder gebildet ist. Am Kolben ist ein Seil befestigt, das um eine Kupplungsscheibe gewickelt ist. Zwischen der Kupplungsscheibe und der Wickelwelle ist die Freilaufkupplung vorgesehen. Die Freilaufkupplung kann dabei durch eine Radial-Innenfreilaufkupplung gebildet sein, wobei ein Sollbruchstift zwischen der Kupplungsscheibe und dem Gehäuse vorliegen kann.

Aus der DE-A-22 62 889 ist eine Aufwickelvorrichtung bekannt, bei der die Gurtbandspule ein von den Treibgasen des pyrotechnischen Treibsatzes beaufschlagter Drehkolben ist. Bei dieser Aufwickelvorrichtung kann der mit einem Flügel versehene Drehkolben jedoch nur um etwa 310° gedreht werden, was zu einer Beseitigung einer größeren Gurtlose nicht ausreicht.

Aufgabe der Erfindung ist es, die dynamische Wirkung des Rückstrammers nach der DE-B-25 10 514 zu verbessern.

Diese Aufgabe wird durch eine Aufwickelvorrichtung mit den Merkmalen des Patentanspruchs 1 gelöst.

Durch die erfindungsgemäße rotationssymmetrische Anordnung mehrerer Drehflügel an der Drehkolbenwelle werden an derselben angreifende Radialkräfte ausgeglichen. Es kann damit ein stärkerer Treibsatz zur Anwendung kommen bzw. die Drehkolbenwelle braucht nicht übermäßig massiv ausgebildet zu werden. Insbesondere kann die Lagerung der Drehkolbenwelle in dem Gehäuse vereinfacht werden. Weiterhin vervielfacht sich das Drehmoment, das die Treibgase der Drehkolbenwelle bzw. den Drehzylinder erteilen, entsprechend der Anzahl der Drehflügel. Das einmal entfaltete Drehmoment, das in den rotierenden Massen des Gurtaufrollautomaten und des Rückstrammers gespeichert wird, kann somit aufgrund der Freilaufkupplung praktisch vollständig für den Gurtrückzug genutzt werden.

Da erfindungsgemäß der Drehzylinder die Gurtbandspule allein antreibt, bis die Freilaufkupplung zwischen der Drehkolbenwelle und dem Gehäuse des Rotationskolbenmotors sich löst, besitzt der Drehzylinder eine größere Schwungmasse als der Drehkolben, so daß bei Treibgasbeaufschlagung in dem Drehzylinder eine größere Schwungenergie gespeichert werden kann als in dem Drehkolben. Außerdem wäre im umgekehrten Fall, d. h. wenn die Drehkolbenwelle zunächst die Gurtbandspule antreibt, an der Drehkolbenwelle eine zusätzliche Antriebsscheibe erforderlich.

Nachstehend sind Ausführungsformen der Erfindung anhand der Zeichnung erläutert. Darin zeigen:

Figur 1 eine Vorderansicht der Aufwickelvorrichtung mit teilweise weggebrochenem Rotationskolbenmotorgehäuse;

Figur 2 einen Schnitt entlang der Linie II-II in Figur 1;

Figur 3 einen Längsschnitt durch den Rotationskolbenmotor entlang der Linie III-III in Figur 1;

Figur 4 eine Innenansicht des Rotationskolbenmotors, und zwar die Ansicht IV-IV aus Figur 3 ohne Befestigungsrahmen, Flanschschraube und Ringscheibe;

Figur 5 einen Schnitt entlang der Linie V-V in Figur 3;

Figur 6 eine teilweise geschnittene Ansicht durch eine Ausführungsform der Mitnehmerkupplung;

Figur 7 einen Schnitt entlang der Linie VII-VII in Figur 6;

Figuren 8 bis 11 jeweils schematisch einen Schnitt durch den Rotationskolbenmotor mit bei der Gurtstrammung auftretenden Drehflügelstellungen.

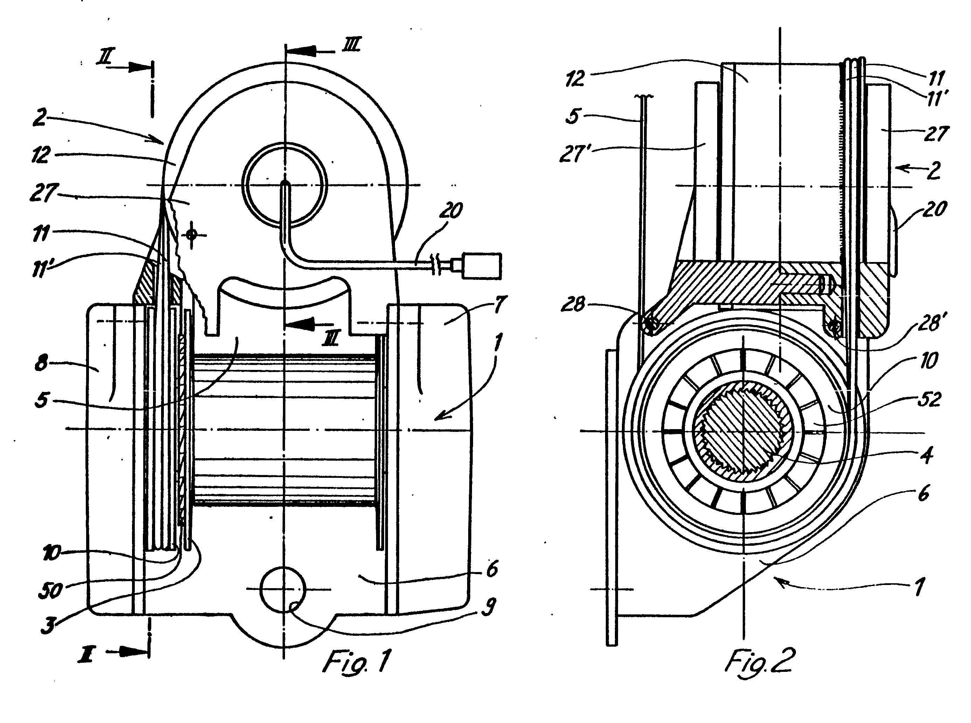

Gemäß Figur 1 und 2 besteht die Aufwickelvorrichtung im wesentlichen aus einem Gurtaufsollautomaten 1 und einem Rückstrammer 2. Bei dem Gurtaufrollautomaten 1 handelt es sich um einen der heutzutage gängigen Typen. Das heißt, auf einer Gurtbandseule 3 auf einer Aufrollerwelle 4 ist ein Gurtband 5 zu einem Wickel aufgerollt.

Die Aufrollerwelle 4 ist in einem Gehäuse 6 mit plattenförmiger Rückwand drehbar gelagert. zum Abdecken des Blockiermechanismus sowie der Aufwickelfeder des Gurtaufrollautomaten 1 ist beiderseits der Gurtbandspule 3 am Gehäuse 6 eine Abdeckkappe 7 bzw ein Federgehäuse 8 befestigt. Der Gurtaufrollautomat 1 wird mittels einer Schraube in der Bohrung 9 am Fahrzeug befestigt.

Um eine auf der Aufrollerwelle 4 angeordnete, mit der Gurtbandspule 3 kuppelbare Kupplungsscheibe 10 ist vorzugsweise mehrmals ein Zugmittel gewickelt, das beispielsweise aus zwei parallelen Seilen 11, 11' besteht. Die beiden Seile 11, 11' sind mit etwa halber Umschlingung auf dem Mantel des Drehzylinders 12 des Rotationskolbenmotors des Rückstrammers 2 angeordnet und daran befestigt.

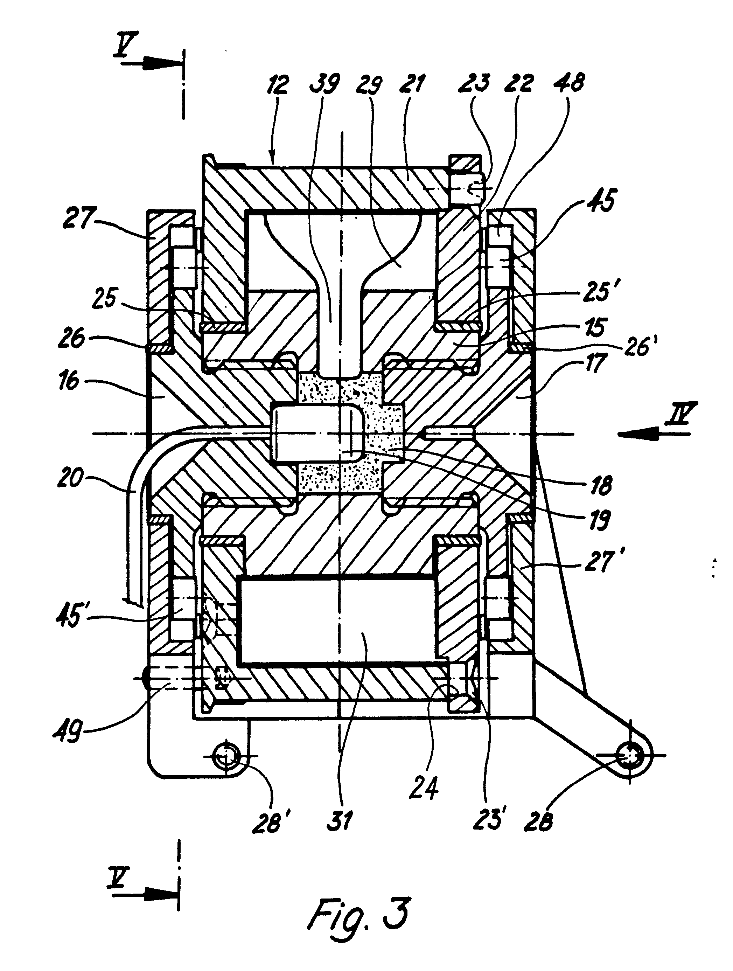

In der Drehkolbenwelle 15 des Rotationskolbenmotors des Rückstrammers 1 befindet sich gemäß Figur 3, abgedichtet über je eine Flanschschraube 16 bzw. 17 an beiden Enden der Drehkolbenwelle 15, ein Treibsatz 78 und ein Zünder 19. Ein Zündkabel 20 führt durch die Flanschschraube nach außen.

Der Drehzylinder 12 besteht aus einem topfförmigen Teil 27 und einer Ringscheibe 22. Zur Befestigung der Ringscheibe 22 an dem topfförmigen Teil 21 des Drehzylinders 72 sind an dem Rand des topfförmigen Teils 21 Stifte 23 angegossen, die in Bohrungen 24 der Ringscheibe 22 gesteckt und vernietet sind, wie bei dem in Figur 3 unten dargestellten Stift 23' verdeutlicht.

Der Drehzylinder 12 ist mittels Gleitlager 25, 25' auf der Drehkolbenwelle 15 drehbar gelagert. Die Drehkolbenwelle 15 ist ihrerseits mittels Gleitlagern 26, 26' in einem vorderen und einem hinteren Befestigungsrahmenteil 27, 27' gelagert.

Die Befestigungsrahmenteile 27, 27', die das Gehäuse des Rotationskolbenmotors bilden, sind über Befestigungsbohrungen 28, 28' am Gehäuse 6 des Gurtaufrollautomaten 1 befestigt.

Ein Fixierstift 49 ist zwischen dem Drehzylinder 12 und dem Befestigungsrahmenteil 27 vorgesehen. Der Stift 49 ist als Sollbruchstift ausgebildet. Er hält unter leichter Vorspannung die Teile des Rotationskolbenmotors klapperfrei zusammen.

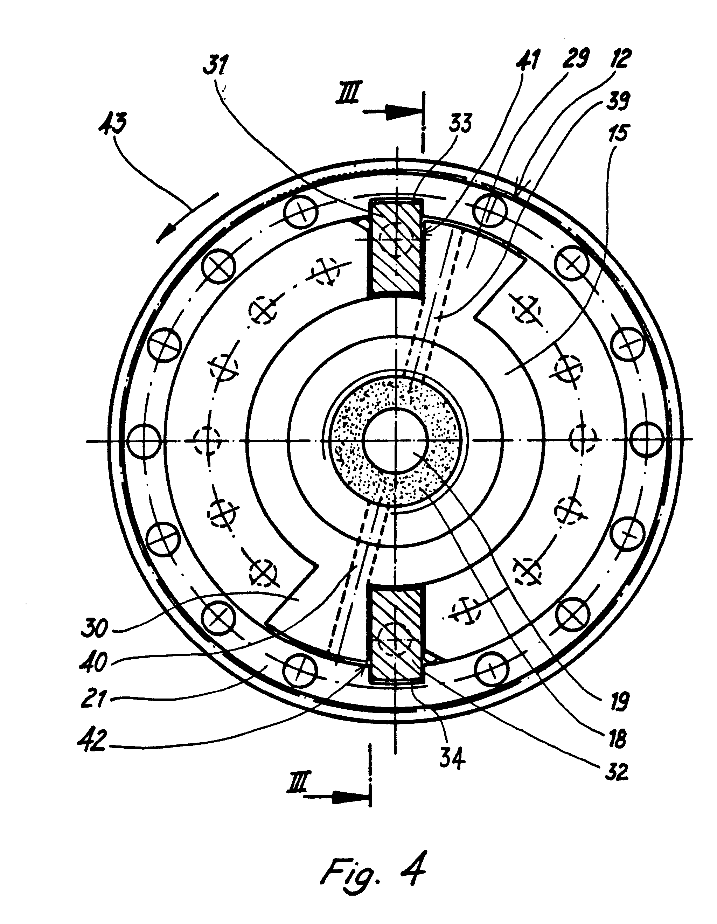

Wie insbesondere Figur 4 zu entnehmen, sind an der Drehkolbenwelle 15 im Abstand von 180° zwei Drehflügel 29, 30 befestigt. Zwei weitere Drehflügel 31, 32 sind mit der Ringscheibe 22 verbunden und befinden sich mit gleichem Abstand in den Aufnahmenuten 33, 34 des toppförmigen Teiles 21 des Drehzylinders 12.

Vom Treibsatz 18 erstreckt sich durch die Wandung der Drehkolbenwelle 15 je eine Bohrung 39, 40 in die beiden Drehflügel 29, 30 der Drehkolbenwelle 15 unter Bildung von sich radial nach außen erweiternden Ausströmöffnungen in jede der beiden Expansionskammern 41 und 42 zwischen dem Drehflügel 29 der Drehkolbenwelle 15 und dem Drehflügel 31 des Drehzylinders 12 bzw. zwischen dem zweiten Drehflügel 30 der Drehkolbenwelle 15 und dem zweiten Drehflügel 32 des Drehzylinders 12.

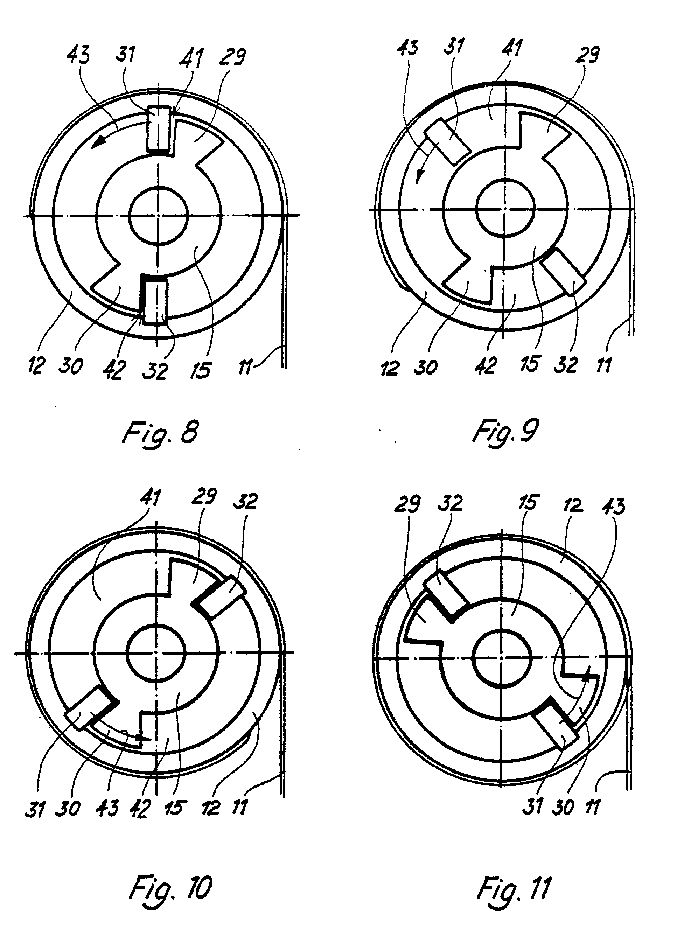

Nach erfolgter Zündung des Treibsatzes 18 gelangen die Treibgase über die Bohrungen 39, 40 in die beiden von den Drehflügeln 29 und 31 bzw. 30 und 32 eingeschlossenen Expansionskammern 41, 42 und dehnen sich aus. Dabei werden die Drehflügel 31, 32 des Drehzylinders 12 in Richtung des Pfeiles 43 in Figur 8 in Rotation versetzt. Der Fixierstift 49 zwischen dem Drehzylinder 12 und dem Befestigungsrahmenteil 27 wird dabei zerbrochen. Die Drehflügel 29, 30 der Drehkolbenwelle 15 bleiben zunächst fixiert, und zwar solange bis die Drehflügel 31, 32 des Drehzylinders 12 die in Figur 10 dargestellte Stellung erreichen, d.h. gegen die Drehflügel 29, 30 der Drehkolbenwelle 15 stoßen.

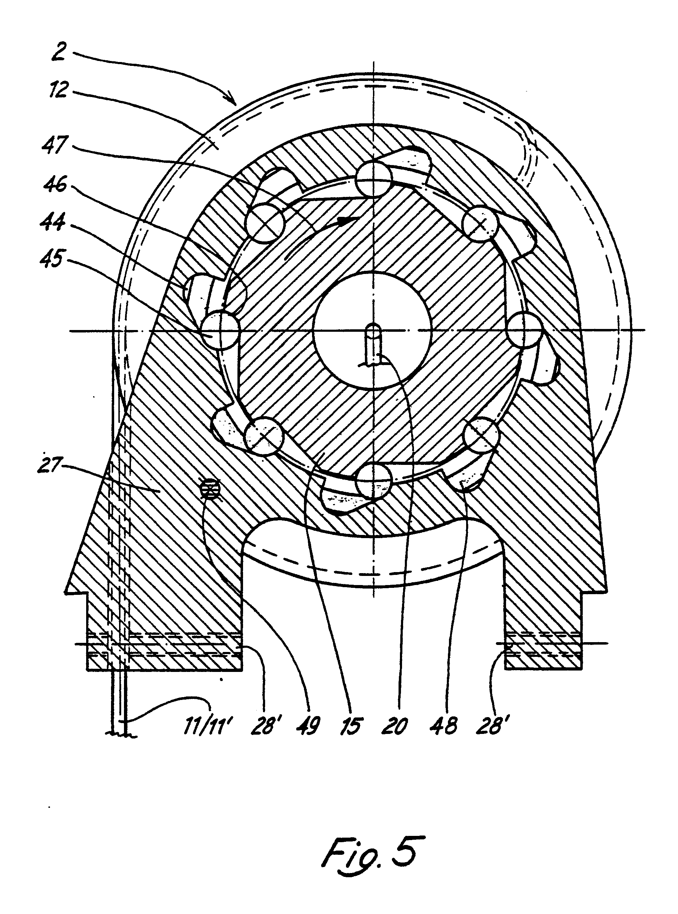

Diese Fixierung der Drehkolbenwelle 15 wird durch eine Freilaufkupplung zwischen der Drehkolbenwelle 15 und dem Gehäuse des Rotationskolbenmotors bewerkstelligt. Gemäß Figur 3 und 5 ist die Freilaufkupplung zwischen der Drehkolbenwelle 15 und jedem Befestigungsrahmenteil 27, 27' als Radial-Innenfreilaufkupplung ausgebildet. Dazu sind in den Befestigungsrahmenteilen 27, 27' jeweils eine Anzahlung keilförmig zulaufender Ausnehmungen 44 angebracht, die mit Klemmrollen 45 bestückt sind.

Bei der in Figur 5 dargestellten Sperrstellung, d.h. beim Klemmen der Rollen 45 in den keilförmigen Ausnehmungen 44 liegen die Rollen 45 in ihrem Durchmesser angepaßten Ausnehmungen 46 in den das Freilaufinnenteil bildenden Flanschschrauben 16, 17. Beim Lösen der Freilaufkupplung, d.h. wenn sich die Drehkolbenwelle 15 in Richtung des Pfeiles 47 der Figur 5 zu drehen beginnt, werden die Rollen 45 von den Flanschschrauben 16, 17 weg nach außen in die keilförmigen Ausnehmungen 44 der Befestigungsrahmenteile 27, 27' bewegt, so daß sich die Drehkolbenwelle 15 frei drehen kann. Die geschilderte Freilaufkupplung stellt also ein Richtgesperre dar, d.h. ein nur in einer Drehrichtung sperrendes Gesperre.

Die Klemmrollen 45, die aus Kunststoff hergestellt sein können, sind über Sollbruchstellen mit einem Fixierring 48 verbunden bzw. damit einstückig ausgebildet.

Sobald die Drehflügel 31, 32 gegen die Drehflügel 29, 30 der Drehkolbenwelle 15 stoßen, also die in Figur 70 dargestellte Drehstellung erreicht haben, ist die Energieeinspeisung durch die Treibgase abgeschlossen und die bis zu diesem Zeitpunkt über die Klemmrollen 45 gegen die Befestigungsrahmenteile 27, 27' abgestützte Drehkolbenwelle 15 beginnt sich zu drehen, so daß die Klemmrollen 45 in die keilförmigen Ausnehmungen 44 der Befestigungsrahmenteile 27, 27' gedrückt werden. Damit ist der Überholkupplungsvorgang abgeschlossen, d.h. die Drehkolbenwelle 15 dreht gemeinsam mit dem Drehzylinder 12 weiter, wie in Figur 11 dargestellt, bis die Schwungenergie des Drehzylinders 12 und des Drehkolbens in Gurtstrammungsarbeit umgewandelt ist.

Der Stoß zwischen den Drehflügeln 29, 30 der Drehkolbenwelle 15 und den Drehflügeln 31, 32 des Drehzylinders 12 sollte dabei weitgehend gedämpft erfolgen, um ein Voreilen der Drehkolbenwelle 15 zu vermeiden, d.h. der Drehkolben und der Drehzylinder 12 sollen als gemeinsame Schwungmasseneinheit weiterdrehen. Dies kann durch eine entsprechend abgestimmte Reibung zwischen dem Drehzylinder 12 und der Drehkolbenwelle 15 in der Endstellung sichergestellt werden.

In Figur 8 bis 11 ist die Sequenzfolge im Aktivierungsfall mit der Wirkungsweise des Drehkolbens und des Drehzylinders des Rotationskolbenmotors schematisch dargestellt. Figur 8 zeigt dabei den Ruhezustand bzw. den Zeitpunkt der Zündung des Treibsatzes 18. Figur 9 zeigt die Stellung des Drehzylinders 12 kurz nach der Zündung des Treibsatzes 18, wobei der Drehzylinder 12 das Seil 11 aufspult. Die Drehkolbenwelle 15 ist dabei durch die Klemmrollen 45, die sich gegen die Befestigungsrahmenteile 27, 27' abstützen, arretiert. In Figur 10 ist nach ca. 140° Drehwinkel der Drehflügel 31, 32 des Drehzylinders 12 der Energieeinspeisungsprozeß abgeschlossen. Die Drehflügel 31, 32 des Drehzylinders 12 stoßen dann an die Drehflügel 29, 30 der Drehkolbenwelle 15 an. Nun setzt der Freilaufeffekt ein, d.h. der Drehzylinder 12 und die Drehkolbenwelle 15 drehen gemeinsam weiter, wie in Figur 11 dargestellt. Die Rotation und somit der Gurtstrammungsvorgang sind dann abgeschlossen, wenn der Widerstand im Gurtband 5 so stark angewachsen ist, daß eine weitere Kraftentnahme aus der kinetischen Energie der rotierenden Masse nicht mehr möglich ist. Die normale Blockierung des Gurtaufrollautomaten 1 fängt die weiter ansteigende Kraft im Gurtband 5, d.h. die Crash-Belastung, auf.

Damit die auf der Aufrollerwelle 4 angeordnete Kupplungsscheibe 10 das Drehmoment, das ihr durch die Rotation des Drehzylinders 12 gegebenenfalls zusammen mit dem Drehkolben über die Seile 11, 11' erteilt wird, auf die Gurtbandspule 3 überträgt, ist eine als Freilaufkupplung ausgebildete Mitnehmerkupplung vorgesehen.

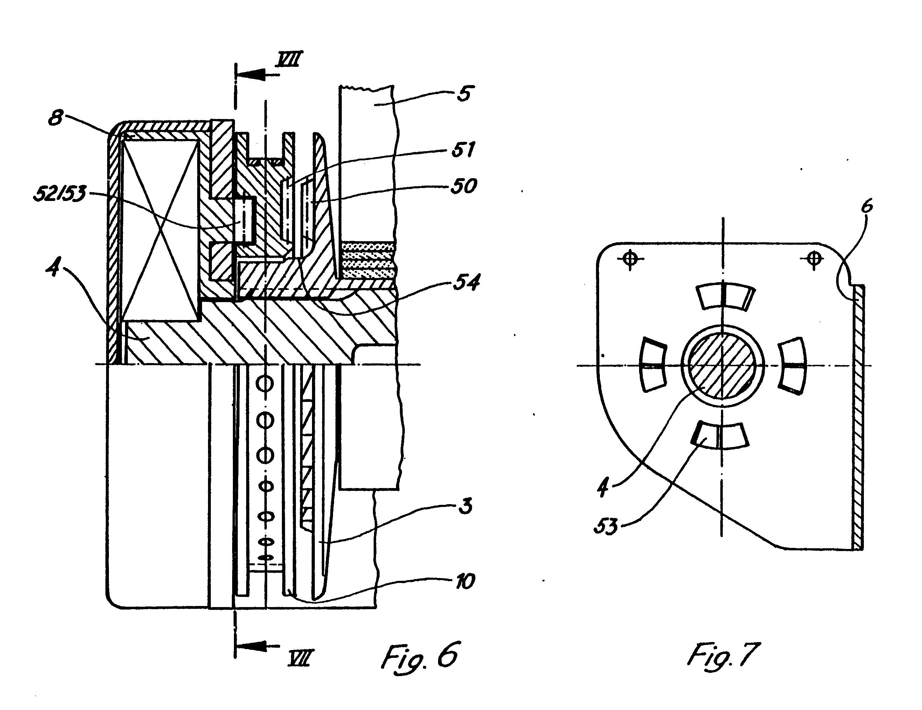

Gemäß Figur 6 und 7 ist dazu die Kupplungsscheibe 10 axial verschiebbar auf der Aufrollerwelle 4 angeordnet. Weiterhin ist auf der der Kupplungsscheibe 10 zugewandten Stirnseite der Gurtbandspule 3 eine Verzahnung 50 vorgesehen, der eine entsprechende Verzahnung 51 an der Kupplungsscheibe 10 gegenüberliegt. Die Zahnköpfe der Verzahnungen 50 und 51 verlaufen in radialer Richtung. Die Verzahnungen 50 und 51 weisen ein sägezahnförmiges Profil auf, d.h. jeder Zahn besitzt eine senkrechte und eine schräge Zahnflanke. Die Kupplungsscheibe 10 ist mit einer negativen Andrückverzahnung 52 mit leichtem Preßsitz auf einer positiven Andrückverzahnung 53 der Feder-Kassette 8 befestigt. Während die Andrückverzahnung 52 an der Kupplungsscheibe 10 über den gesamten Umfang verteilt ist, besteht die Andrückverzahnung 53 an der Federkassette 8 aus vier Segmenten mit je zwei Zähnen.

Im normalen Funktionszustand des Gurtaufrollautomaten 1 hat die Kupplungsscheibe 10 keine Berührung mit der Gurtbandspule 3 bzw. der Aufrollerwelle 4. Erst im Aktivierungsfall, wenn sie von den Seilen 11, 11' in Rotation versetzt wird, bewegt sich die Kupplungsscheibe 10 in Figur 6 axial nach rechts. Dieser Hub wird durch die Andrückverzahnung 52, 53 bewerkstelligt. Dabei läuft die Innenbohrung der Kupplungsscheibe 10 auf den Zentrierbund 54 der Gurtbandspule 3 auf, bis die Arretierverzahnungen 50 und 51 fest verkuppelt sind. Über ein Kerbzahnprofil ist die Gurtbandspule 3 mit der Aufrollerwelle 4 fest verbunden (Figur 2).

**Patentansprüche**

1. Aufwickelvorrichtung für Sicherheitsgurte in Fahrzeugen, mit einem Gurtaufrollautomaten (1) und einem Rückstrammer (2), der mit einem durch einen pyrotechnischen Treibsatz (18) antreibbaren Rotationskolbenmotor versehen ist, der mit der Drehkolbenwelle (15) drehfest verbunden Drehflügel (29, 30) aufweist, die mit je einem Drehflügel (31, 32) am Zylinder (12) eine Expansionskammer (41, 42) für die Treibgase bilden, wobei die Drehkolbenwelle (15) und der Zylinder (12) drehbar in dem Gehäuse (27, 27') des Rotationskolbenmotors gelagert sind und der Zylinder (12) den Gurtaufrollautomaten (1) antreibt, dadurch gekennzeichnet, daß die Drehflügel (29, 30) an der Drehkolbenwelle (15) und die Drehflügel (31, 32) am Zylinder (12) in an sich bekannter Weise in Drehrichtung hintereinander und mit gleichem Abstand voneinander angeordnet sind, und daß der Antrieb der Gurtbandspule (3) nach Freigabe der Drehkolbenwelle (15) durch eine Freilaufkupplung erfolgt, die sich im Sinne einer Überholkupplung öffnet, sobald durch die Treibgasbeaufschlagung die Drehflügel (29, 30) der Drehkolbenwelle (15) und die Drehflügel (31, 32) des Drehzylinders (12) aneinander stoßen.

2. Aufwickelvorrichtung nach Anspruch 1, dadurch gekennzeichnet, daß die Freilaufkupplung zwischen der Drehkolbenwelle (15) und dem Gehäuse (27, 27') als Radial-Innenfreilaufkupplung mit auf der Drehkolbenwelle (15) drehfest angeordnetem Innenteil (18) ausgebildet ist.

3. Aufwickelvorrichtung nach Anspruch 1 oder 2, dadurch gekennzeichnet, daß zwischen dem Zylinder (12) und dem Gehäuse (27, 27') des Rotationskolbenmotors ein Sollbruchstift (49) vorgesehen ist.

**Claims**

1. Winding device for safety belts in vehicles, with an automatic belt reeling unit (1) and a jerk-action tightener (2) provided with a rotary piston motor driven by a pyrotechnic propulsion composition (18), the motor having propellor vanes (29, 30) which are secured in rotation with the rotary piston shaft (15) and which with vanes (31, 32) on the cylinder (12) form expansion chambers (41, 42) for the propulsion gases, the rotary piston shaft (15) and the cylinder being rotatably mounced in the housing (17, 27') of the rotary piston motor with the cylinder (12) triving the automatic belt reeling unit (1), characterised by the fact that the rotary vanes (29, 30) on the rotary piston shaft (15) and the rotary vanes (31, 32) on the cylinder (12) are positioned in a manner known in succession to one another in the direction of rotation and at equal distances apart, the drive of the belt reel (3) being effected after the release of the rotary piston shaft (15) by a free-wheel coupling, which releases in the direction of an overriding clutch as soon as the rotary vanes (29, 30) of the rotary piston shaft (15) and the rotary wings (31, 32) of the rotary cylinder (12) which are subject to propulsion gases, make contact with one another.

2. Winding device in accordance with Claim 1, characterised by the fact that the free-wheel coupling between the rotary piston shaft (15) and the housing (27, 27') is constructed as a radial internal free-wheel coupling with an internal part (16) secured rotationally on the rotary piston shaft.

3. Winding device in accordance with Claim 1 or 2, characterised by the fact that a shear pin (49) is provided between the cylinder (12) and the housing (27, 28') of the rotary piston motor.

**Revendications**

1. Dispositif d'enroulement pour ceintures de sécurité de véhicules, comprenant un dispositif d'enroulement automatique (1) et un raidisseur (2) qui est muni d'un moteur à piston rotatif qui peut être entraîné par une charge propulsive pyrotechnique (18) et qui comporte des palettes (29, 30) lesquelles, raccordées solidaires en rotation à l'arbre (15) du piston rotatif, forment respectivement, avec chacune des palettes (31, 32) du cylindre (12), une chambre d'expansion (41, 42) pour les gaz propulsifs, l'arbre (15) du piston rotatif et le cylindre (12) étant montés mobiles en rotation dans le carter (27, 27') du moteur à piston rotatif et le cylindre (12) entraînant le dispositif d'enroulement automatique (1) de la ceinture, caractérisé par le fait que les palettes (29, 30) de l'arbre (15) du piston rotatif et les palettes (31, 32) du cylindre (12) sont disposées de façon connue à la même distance les unes derrières les autres dans le sens de la rotation et que l'entraînement de la bobine (3) de la sangle, après libération de l'arbre (15) à piston rotatif s'effectue par un accouplement à roue libre qui s'ouvre dans le sens d'un embrayage de rattrapage dès que les palettes (29, 30) de l'arbre (15) à piston rotatif et les palettes (31, 32) du cylindre rotatif (12) butent les unes contre les autres sous l'effet des gaz propulsifs.

2. Dispositif d'enroulement selon la revendication 1 caractérisé par le fait que l'accouplement à roue libre entre l'arbre (15) du piston rotatif et le carter (27, 27') est réalisé sous la forme d'un accouplement à roue libre interne radial avec partie interne (16) montée solidaire en rotation sur l'arbre 15 du piston rotatif.

3. Dispositif d'enroulement selon la revendication 1 ou 2, caractérisé par le fait qu'une goupille de rupture (49) est prévue entre le cylindre (12) et le carter (27, 27') du moteur à piston rotatif.

Fig. 1

Fig. 2

0 093 844

Fig. 3

Fig. 4

Fig. 5

Fig. 7

Fig. 6

Fig. 8

Fig. 9

Fig. 10

Fig. 11